(19) **Europäisches Patentamt / European Patent Office / Office européen des brevets**

(11) **EP 4 580 278 A1**

(12) **EUROPEAN PATENT APPLICATION**
published in accordance with Art. 153(4) EPC

(43) Date of publication:
**02.07.2025 Bulletin 2025/27**

(21) Application number: **22956143.6**

(22) Date of filing: **26.08.2022**

(51) International Patent Classification (IPC):
***H04W 72/04*** (2023.01)

(52) Cooperative Patent Classification (CPC):
**H04W 74/006; H04L 1/08;** H04W 74/004;
H04W 74/0833

(86) International application number:
**PCT/CN2022/115247**

(87) International publication number:
**WO 2024/040598 (29.02.2024 Gazette 2024/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HE, Chuanfeng
Dongguan, Guangdong 523860 (CN)**

(74) Representative: **Penza, Giancarlo
Bugnion S.p.A.
Viale Lancetti, 17
20158 Milano (IT)**

(54) **WIRELESS COMMUNICATION METHOD AND TERMINAL DEVICE**

(57)     A wireless communication method and a terminal device. The method comprises: a terminal device determining the number of repeated transmissions of a physical random access channel (PRACH) according to first information, wherein the first information comprises at least one of the following: a PRACH repeated transmission process corresponding to the repeated transmissions of the PRACH; the calculated transmission power of the PRACH; the resource configuration for the repeated transmissions of the PRACH; and a measurement result of a downlink signal.

200

```
┌─────────────────┐              ┌─────────────────┐
│ Terminal device │              │ Network device  │
└────────┬────────┘              └────────┬────────┘
         │                                │
┌────────┴─────────┐                      │
│ S210, a number of│                      │
│ PRACH repeated   │                      │
│ transmissions is │                      │
│ determined       │                      │
│ according to     │                      │
│ first information │                     │
└────────┬─────────┘                      │
         │   S220, the PRACH repeated     │
         │   transmissions are performed  │
         │   according to the number of   │
         │   PRACH repeated transmissions │
         │───────────────────────────────│
         │                                │
```

**FIG. 4**

**Description**

TECHNICAL FIELD

Embodiments of the present disclosure relate to the field of communication, and in particular to, a method for wireless communication and a terminal device.

BACKGROUND

In a random access procedure, a terminal device receives a Random Access Response (RAR) sent by a network device in an RAR reception window after transmitting one Physical Random Access Channel (PRACH). When the terminal device does not receive the RAR, the terminal device retransmits the PRACH on a next available PRACH resource, and ramps up a power of the PRACH by one step.

However, in a case of a limited coverage, the terminal device cannot indefinitely increase the power of the PRACH to enable the network device to detect the PRACH. Therefore, a PRACH repeated transmission is introduced. In this case, how to determine the number of PRACH repeated transmissions to both improve coverage performance of the PRACH and reduce interference caused by the PRACH transmission is an urgent problem to be solved.

SUMMARY

The present disclosure provides a method for wireless communication and a terminal device, which are beneficial to both improving the coverage performance of the PRACH and reducing the interference caused by the PRACH transmission.

In a first aspect, there is provided a method for wireless communication, including: a terminal device determines a number of PRACH repeated transmissions according to first information, where the first information includes at least one of:

a PRACH repeated transmission procedure corresponding to the PRACH repeated transmissions, where one PRACH repeated transmission procedure corresponds to one RAR;

a calculated transmit power for a PRACH;

a resource configuration for the PRACH repeated transmissions; or

a measurement result of a downlink signal.

In a second aspect, there is provided a terminal device configured to perform the method in the first aspect described above or in various implementations thereof.

Specifically, the terminal device includes functional modules configured to perform the method in the first aspect described above or in various implementations thereof.

In a third aspect, there is provided a terminal device including a processor and a memory, where the memory is configured to store a computer program, and the processor is configured to invoke and execute the computer program stored in the memory to perform the method in the first aspect described above or in various implementations thereof.

In a fourth aspect, there is provided a chip configured to implement the method in the first aspect described above or in various implementations thereof.

Specifically, the chip includes a processor configured to invoke and execute a computer program from a memory, to enable a device on which the apparatus is mounted to perform the method in the first aspect described above or in various implementations thereof.

In a fifth aspect, there is provided a computer-readable storage medium configured to store a computer program that causes a computer to perform the method in the first aspect described above or in various implementations thereof.

In a sixth aspect, there is provided a computer program product including computer program instructions that cause a computer to perform the method of the first aspect described above or in various implementations thereof.

In a seventh aspect, there is provided a computer program causing a computer to perform the method of the first aspect described above or in various implementations thereof when the computer program is executed on a computer.

According to the above technical solution, the terminal device may determine the number of PRACH repeated transmissions according to at least one of: the PRACH repeated transmission procedure corresponding to the PRACH repeated transmissions, the calculated transmit power for the PRACH, the resource configuration for the PRACH transmission, and the measurement result of the downlink signal. It is thus beneficial to both improving the coverage performance of the PRACH and reducing the interference caused by the PRACH transmission.

BRIEF DESCRIPTION OF THE DRAWINGS

FIG. 1 is a schematic diagram of architecture of a communication system according to an embodiment of the present disclosure.

FIG. 2 is a schematic interaction diagram of a random access procedure.

FIG. 3 is a schematic diagram of PRACH repeated transmissions.

FIG. 4 is a schematic interaction diagram of a method for wireless communication according to an embodiment of the present disclosure.

FIG. 5 is a schematic diagram of the number of PRACH repeated transmissions included in a PRACH repeated transmission procedure according to an embodiment of the present disclosure.

FIG. 6 is a schematic diagram of determining the number of PRACH repeated transmissions according to a PRACH power according to an embodiment of the present disclosure.

FIG. 7 is a schematic block diagram of a terminal device according to an embodiment of the present disclosure.

FIG. 8 is a schematic block diagram of a communication device according to an embodiment of the present disclosure.

FIG. 9 is a schematic block diagram of a chip according to an embodiment of the present disclosure.

FIG. 10 is a schematic block diagram of a communication system according to an embodiment of the present disclosure.

DETAILED DESCRIPTION

The technical solution in the embodiments of the disclosure is described below with reference to the drawings in the embodiments of the disclosure. It is apparent that the described embodiments are a part of the embodiments of the disclosure, rather than all of the embodiments. Based on the embodiments of the disclosure, all other embodiments obtained by those skilled in the art without creative effort fall within the scope of protection of the disclosure.

The technical solution in the embodiments of the present disclosure may be applied to various communication systems, such as: a Global System Of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system for NR system, a LTE-based access to Unlicensed Spectrum (LTE-U) system, a NR-based access to Unlicensed Spectrum (NR-U) system, a Non-Terrestrial Networks (NTN) system, a Universal Mobile Telecommunication System (UMTS), a Wireless Local Area Network (WLAN), a Wireless Fidelity (Wi-Fi), a 5th-generation (5G) system or other communication systems.

Generally speaking, traditional communication systems support a limited number of connections and are easy to implement. However, with the development of communication technology, mobile communication systems will not only support traditional communication, but also support, for example, Device to Device (D2D) communication, Machine To Machine (M2M) communication, Machine Type Communication (MTC), Vehicle To Vehicle (V2V) communication, or Vehicle to everything (V2X) communication, etc. The embodiments of the present disclosure may also be applied to these communication systems.

Optionally, the communication system in the embodiments of the present disclosure may be applied to a Carrier Aggregation (CA) scenario, a Dual Connectivity (DC) scenario, and a Standalone (SA) network distribution scenario.

Optionally, the communication system in the embodiments of the present disclosure may be applied to an unlicensed spectrum, and the unlicensed spectrum may also be considered as a shared spectrum. Alternatively, the communication system in the embodiments of the present disclosure may also be applied to a licensed spectrum, and the licensed spectrum may also be considered as a non-shared spectrum.

The embodiments of the present disclosure are described in connection with a network device and a terminal device. The terminal device may also be referred to as User Equipment (UE), an access terminal, a user unit, a user station, a mobile station, a remote station, a remote terminal, a mobile device, a user terminal, a terminal, a wireless communication device, a user agent or a user device, etc.

The terminal device may be a Station (ST) in a WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved Public Land Mobile Network (PLMN) network, etc.

In the embodiments of the present disclosure, the terminal device may be deployed on land, and include indoor or outdoor device, hand-held device, wearable device or vehicle-mounted device. The terminal device may also be deployed on the water (such as on the ships, etc.). The terminal device may also be deployed in the air (such as in airplanes, in balloons and in satellites, etc.).

In the embodiments of the present disclosure, the terminal device may be a mobile phone, a Pad, a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

By way of example and not as a limitation, in the embodiments of the present disclosure, the terminal device may also be a wearable device. The wearable device may also be referred to as a wearable smart device, which is a general term of wearable devices that are intelligently designed and developed by applying wearable technology to daily wear, such as glasses, gloves, watches, clothing and shoes. The wearable device is a portable device that is worn directly on the body or integrated into the user's clothes or accessories. The wearable device is not only a kind of hardware device, but also realizes powerful functions through software support, data interaction and cloud interaction. The generalized wearable smart device has full functions and a large size, and the generalized wearable smart device may realize complete or partial functions without relying on smart phones, such as smart watches or smart glasses, and the generalized wearable smart device only focus on certain application functions and need to be used in conjunction with other devices (such as smart phones), such as various smart bracelets and smart jewelry for monitoring physical signs.

In the embodiments of the present disclosure, the network device may be a device configured to communicate with a mobile device, and the network device may be an access point (AP) in a WLAN, a Base Transceiver Station (BTS) in a GSM or CDMA, a NodeB (NB) in a WCDMA, an evolved Node B (eNB or eNodeB) in an LTE, a relay station or an access point, a vehicle-mounted device, a wearable device, a network device or a gNB in an NR network, a network device in a future evolved PLMN network or a network device in an NTN network, etc.

By way of example and not as a limitation, in the embodiments of the present disclosure, the network device may have mobility characteristics, for example, the network device may be a mobile device. Optionally, the network device may be a satellite, a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, and the like. Optionally, the network device may also be a base station located on land, water, etc.

In the embodiments of the present disclosure, the network device may provide services for a cell, and the terminal device communicates with the network device through transmission resources (e.g., frequency-domain resources, or spectrum resources) used by the cell. The cell may be a cell corresponding to the network device (e.g., base station), and the cell may belong to a macro base station or a base station corresponding to a small cell. The small cell may include a metro cell, a micro cell, a Pico cell, a Femto cell, etc. These small cells have characteristics of small coverage and low transmission power, and the small cells are suitable for providing high-speed data transmission services.

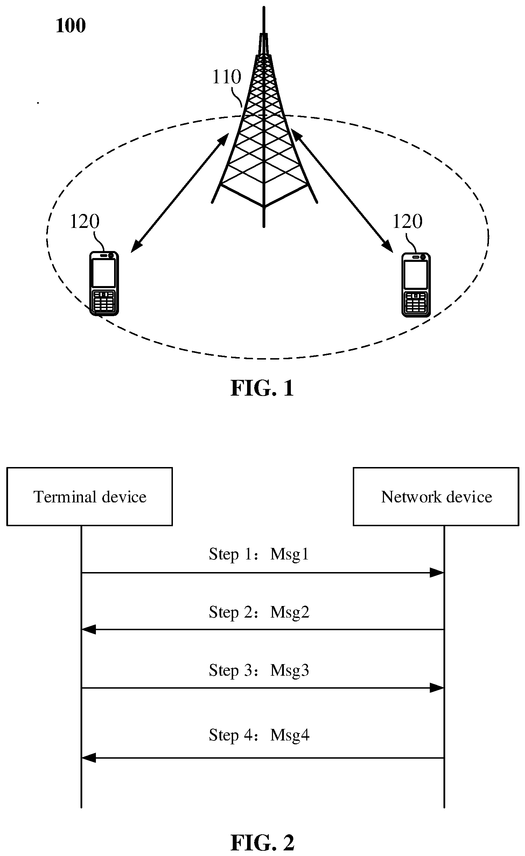

Exemplarily, FIG. 1 illustrates a communication system 100 to which the embodiments of the present disclosure are applied. The communication system 100 may include a network device 110 that communicates with a terminal device 120 (or referred to as a communication terminal, or a terminal). The network device 110 may provide communication coverage for a particular geographic area and may communicate with terminal devices located within the coverage.

FIG. 1 exemplarily illustrates one network device and two terminal devices. Optionally, the communication system 100 may include multiple network devices, and other numbers of terminal devices may be included within the coverage of each network device, which is not limited in the embodiments of the present disclosure.

Optionally, the communication system 100 may also include other network entities, such as network controllers, mobility management entities, etc., which are not limited in the embodiments of the present disclosure.

It is to be understood that a device having a communication function in the network or system in the embodiments of the present disclosure may be referred to as a communication device. Taking the communication system 100 illustrated in FIG. 1 as an example, the communication device may include a network device 110 and terminal devices 120 that both have the communication function, and the network device 110 and the terminal devices 120 may be the devices described above, which will not be described herein. The communication device may also include other devices in the communication system 100, such as network controllers, mobility management entities and other network entities, which are not limited in the embodiments of the present disclosure.

It is to be understood that the terms "system" and "network" are often used interchangeably herein. In the present disclosure, the term "and/or" is only an association relationship describing associated objects and represents that three relationships may exist. For example, A and/or B may represent three conditions, i.e., independent existence of A, existence of both A and B, and independent existence of B. In addition, the character "/" in the present disclosure generally indicates that the relationship between the related objects is "or".

It is to be understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the description of the embodiments of the present disclosure, the term "corresponding" may mean that there is a direct correspondence or an indirect correspondence between two items, may also mean that there is an association relationship between two items, or may be in a relationship such as indicating and indicated, configuring and configured, etc.

In the embodiments of the present disclosure, the term "predefined" or "predefined rules" may be achieved by pre-storing corresponding codes, tables or other means used for indicating relevant information in devices (e.g., including a terminal device and a network device), and the specific implementation thereof is not limited in the present disclosure. For example, the term "predefined" may refer to what is defined in the protocol.

In the embodiments of the present disclosure, the "protocol" may be a standard protocol in the communication field. For example, the protocol may include an LTE protocol, an NR protocol, and related protocols applied in future communication systems, which are not limited in the present disclosure.

In an NR system, a four-step random access procedure is supported. Specifically, the four-step random access procedure includes processes for transmitting a message 1 (Msg1) to a message 4 (Msg4). As an example, as shown in FIG. 2, the four-step random access procedure includes the following step 1 to step 4.

In the step 1, a terminal device transmits a random access preamble (i.e., the Msg 1) to a network device.

Herein, the random access preamble may also be referred to as a preamble, a random access preamble sequence, or a preamble sequence, etc.

Specifically, the terminal device may select a PRACH resource, and the PRACH resource may include a time-domain resource, a frequency-domain resource, and a code-domain resource. The network device transmits random access-related parameters to the terminal device by broadcasting a System Information Block (SIB) 1. Among the parameters, a Reference Signal Receiving Power (RSRP) threshold (rsrp-ThresholdSSB) for a Synchronization Signal Block (SSB) in an RACH common configuration information element (RACH-ConfigCommon IE) is for the terminal device to perform SSB selection. The terminal device compares a measurement result of the RSRP under each SSB with the rsrp-ThresholdSSB, and selects a SSB having a measurement higher than the configured threshold to perform the access. If there is no SSB satisfying the requirement with respect to the configured threshold, the terminal device randomly selects one SSB from all the SSBs to perform the access. Each SSB corresponds to a group of random access preamble resources and RACH occasion (RO) resources, and the terminal device randomly selects from resources for the contention-based random access in the selected SSBs, and sets the preamble index (Preamble_INDEX) to be the selected random access preamble. The network device may estimate a transmission delay between the network device and the terminal device according to the preamble and calibrate uplink timing according to the transmission delay, and may generally determine the resource size required by the terminal device to transmit the Msg 3. In order to allow the network device to more accurately understand the size of the Msg 3 to be transmitted to allocate appropriate uplink resources, the preamble is divided into a preamble group A and a preamble group B. If the preamble group B exists in the random access resource, the terminal device may select a preamble group according to the size of the Msg 3 and a pathloss.

In the step 2, the network device transmits a Random Access Response (RAR) (i.e., the Msg 2) to the terminal device

After the terminal device transmits the preamble to the network device, a random access response window (ra-ResponseWindow) may be enabled, and a corresponding Physical Downlink Control Channel (PDCCH) may be detected within the ra-ResponseWindow according to a Random Access Radio Network Temporary Identifier (RA-RNTI). After the terminal device detects a PDCCH scrambled by the RA-RNTI, the terminal device may obtain a Physical Downlink Shared Channel (PDSCH) scheduled by the PDCCH. The PDSCH includes an RAR corresponding to the preamble.

The RA-RNTI is calculated according to a time-frequency position of the PRACH transmitting the preamble. Therefore, if multiple terminal devices transmit preambles on a same RO, the corresponding RARs are multiplexed in a same RAR Media Access Control Protocol Data Unit (MAC PDU). If the terminal successfully receives the PDCCH scrambled by the RA-RNTI corresponding to the RO resource for transmitting the preamble, and the RAR includes an MAC subPDU carrying a Random Access Preamble Identifier (RAPID) corresponding to the Preamble_INDEX selected in the step of transmitting the Msg 1, then the RAR is successfully received. The terminal may decode the RAR and obtain a Timing Advance Command (TAC), an uplink grant (UL Grant) resource and a Temporary Cell Radio Network Temporary Identity (TC-RNTI) to perform the step of transmitting the Msg 3.

In a case where PDCCH scrambled by the RA-RNTI corresponding to the RO resource for transmitting the preamble is not received during the operating of the ra-ResponseWindow, or in a case where the PDCCH scrambled by the RA-RNTI is received, but the RAR does not contain the MAC subPDU corresponding to Preamble_INDEX, it is considered that the RAR reception fails. In this scenario, if the number of times of transmissions of the preamble does exceed the maximum number of times of the transmissions of the preamble (preambleTransMax) configured by the network, the terminal device needs to retransmit the Msg 1; and if the number of times of the transmissions of the preamble exceeds the preambleTransMax, the terminal device reports a random access problem to an upper layer.

In the step 3, the terminal device transmits the Msg 3.

The terminal device determines whether the RAR belongs to its own RAR message after receiving the RAR message, for example, the terminal device may check by using the preamble index; generates the Msg 3 in a Radio Resource Control (RRC) layer after determining that the received RAR message belongs to its own RAR message; and transmits the Msg 3 to the network device. The Msg 3 is required to carry identification information of the terminal device, etc.

The Msg 3 is mainly for notifying the network device of a trigger event for the random access. For different trigger events for the random access, the Msg 3 transmitted by the terminal device in the step 3 may include different contents.

For example, for a scenario of an initial access, the Msg 3 may include an RRC connection setup request message generated by the RRC layer. In addition, the Msg 3 may further carry, for example, a 5G-Serving-Temporary Mobile Subscriber Identity (S-TMSI) of the terminal device or a random number, etc.

For another example, for a scenario of an RRC connection reestablishment, the Msg 3 may include an RRC connection reestabilshment request message generated by the RRC layer. In addition, the Msg 3 may further carry, for example, a Cell Radio Network Temporary Identifier (C-RNTI), etc.

For another example, for a handover scenario, the Msg 3 may include an RRC handover confirmation (RRC Handover Confirm) message generated by the RRC layer, and the RRC handover Confirm message carries the C-RNTI of the terminal device. In addition, the Msg 3 may further carry information, such as a Buffer Status Report (BSR). For other trigger events such as scenarios where uplink/downlink data arrives, the Msg 3 may include at least the C-RNTI of the terminal device.

In the step 4, the network device transmits a contention resolution message, i.e., the Msg 4, to the terminal device.

The network device transmits the Msg 4 to the terminal device, and the terminal device correctly receives the Msg 4 to complete the contention resolution. For example, during an RRC connection setup procedure, the Msg 4 may carry an RRC connection setup message.

In the random access procedure, after the terminal device transmits one PRACH, the terminal device receives the RAR transmitted by the network device in the RAR reception window. When the terminal device does not receive the RAR, the terminal device retransmits the PRACH on the next available PRACH resource, and ramps up the power of the PRACH by one step.

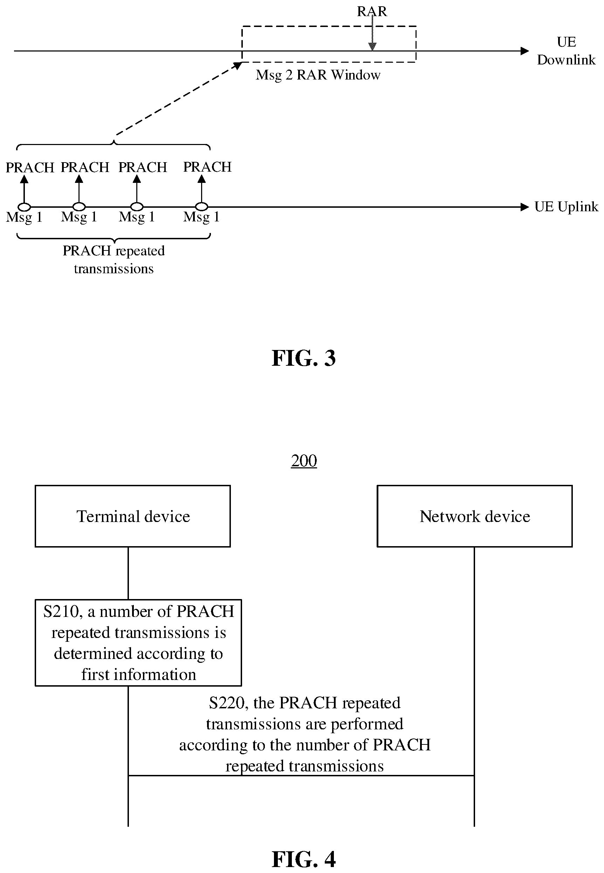

However, in the case of the limited coverage, the terminal device cannot indefinitely increase the power for the PRACH to enable the network device to detect the PRACH. Therefore, the PRACH repeated transmission is introduced. As shown in FIG. 3, one PRACH repeated transmission procedure corresponds to one RAR reception window, and the PRACH repeated transmission procedure includes multiple PRACH repeated transmissions. The network device may receive, in combination, the multiple PRACH repeated transmissions. In this case, how to determine the number of PRACH repeated transmissions to both improve the coverage performance of the PRACH and reduce the interference caused by the PRACH transmission is an urgent problem to be solved.

In order to facilitate understanding of the technical solutions of the embodiments of the present disclosure, the technical solutions of the present disclosure will be described in detail below by way of specific embodiments. The following related technologies, as optional solutions, may be arbitrarily combined with the technical solutions of the embodiments of the present disclosure, and all of these combinations belong to the protection scope of the embodiments of the present disclosure. The embodiments of the present disclosure include at least some of following contents.

FIG. 4 is a schematic flowchart of a method 200 for wireless communication according to an embodiment of the present disclosure. The method 200 may be performed by a terminal device in the communication system shown in FIG. 1. As shown in FIG. 4, the method 200 includes following contents.

In operation S210, a number of PRACH repeated transmissions is determined according to first information.

In operation S220, the PRACH repeated transmissions are performed according to the number of PRACH repeated transmissions.

It is to be understood that the PRACH in the embodiment of the present disclosure may correspond to a two-step random access procedure, or may correspond to the four-step random access procedure; may correspond to a contention-based random access procedure, or may correspond to a non-contention-based random access procedure.

It is to be noted that, in the embodiment of the present disclosure, multiple PRACH transmissions corresponding to one RAR (or one RAR reception window) are referred to as one PRACH repeated transmission procedure, or are considered as one PRACH repeated transmission set.

That is to say, one PRACH repeated transmission procedure may include multiple PRACH transmissions, or one PRACH repeated transmission set may include multiple PRACH transmissions.

In the embodiment of the present disclosure, the terminal device may perform one PRACH repeated transmission procedure, or may perform multiple PRACH repeated transmission procedures. Each PRACH repeated transmission procedure may include multiple PRACH transmissions.

In some embodiments, the number of PRACH repeated transmissions may be the number of PRACH repeated transmissions included in one PRACH repeated transmission procedure. In other words, the number of PRACH repeated transmissions may be a total number of PRACH transmissions corresponding to a same RAR.

For example, the PRACH repeated transmissions to be performed correspond to the first PRACH repeated transmission procedure, and the number of PRACH repeated transmissions is the number of PRACH repeated transmissions included in the first PRACH repeated transmission procedure. That is to say, the terminal device may determine the number of PRACH repeated transmissions included in the first PRACH repeated transmission procedure to be performed.

In some embodiments, the network device may perform merging processing on the received PRACH transmissions in one PRACH repeated transmission procedure to improve the PRACH reception performance.

Optionally, the PRACH repeated transmissions in one PRACH repeated transmission procedure use the same PRACH resource, for example, the same preamble.

In some embodiments, the number of PRACH repeated transmissions included in the first PRACH repeated transmission procedure does not exceed a threshold of the number of PRACH repeated transmissions. Optionally, the threshold of the number of PRACH repeated transmissions may be predefined, or may be configured by the network device.

In some embodiments of the present disclosure, the first information includes at least one of the following:

a PRACH repeated transmission procedure corresponding to the PRACH repeated transmissions;
a calculated transmit power for a PRACH;
a resource configuration for the PRACH repeated transmissions; or
a measurement result of a downlink signal.

Hereinafter, manners for determining the number of PRACH repeated transmissions are respectively described with reference to specific embodiments.

In a first embodiment, the number of PRACH repeated transmissions is determined according to the number of times of execution of the PRACH repeated transmission procedures.

Herein, the number of times of execution may be the number of times that the PRACH repeated transmission procedures have been performed; or may indicates that the PRACH transmission procedure to be performed is which time of PRACH repeated transmission procedure, or in other words, an execution sequential number corresponding to the PRACH repeated transmission procedure to be performed.

In some embodiments of the present disclosure, the operation S210 may include following operation.

The number of PRACH repeated transmissions included in the first PRACH repeated transmission procedure is determined according to an execution sequential number corresponding to the first PRACH repeated transmission procedure.

In some embodiments, the execution sequential number corresponding to the first PRACH repeated transmission procedure may be for indicating that the first PRACH repeated transmission procedure is which time of PRACH repeated transmission procedure performed by the terminal device in the random access procedure.

In some embodiments, the number of PRACH repeated transmissions included in the first PRACH repeated transmission procedure is less than or equal to the number of PRACH repeated transmissions included in the second PRACH repeated transmission procedure. The second PRACH repeated transmission procedure is performed later than the first PRACH repeated transmission procedure.

That is to say, in a case where the RAR corresponding to the first PRACH repeated transmission procedure is not successfully received, the terminal device may increase the number of PRACH repeated transmissions included in the subsequent PRACH repeated transmission procedure, which is beneficial to improve the probability of successfully transmitting the PRACH.

Specifically, the terminal device attempts to receive the RAR transmitted by the network device after performing the PRACH repeated transmission procedure for one time, and the terminal device needs to re-perform the PRACH repeated transmission procedure when the RAR for the current PRACH repeated transmission procedure is not received from the network device. In this case, the terminal device may increase the number of PRACH repeated transmissions included in the subsequent PRACH repeated transmission procedure to increase the probability of successfully transmitting the PRACH.

In other embodiments, the number of PRACH repeated transmissions included in the first PRACH repeated transmission procedure may also be greater than or equal to the number of PRACH repeated transmissions included in the second PRACH repeated transmission procedure. The second PRACH repeated transmission procedure is performed later than the first PRACH repeated transmission procedure.

Specifically, since the network device may merge multiple PRACH transmissions when receiving the PRACH, in the subsequent PRACH repeated transmission procedure, the network device may successfully receive the PRACH by only merging a small amount of PRACH transmissions with the previously received PRACH transmissions. Therefore, the number of PRACH repeated transmissions included in the subsequent PRACH repeated transmission procedure may be less than or equal to the number of PRACH repeated transmissions included in the PRACH repeated transmission procedure performed earlier.

In some embodiments of the present disclosure, the terminal device may determine, according to the execution sequential number corresponding to the first PRACH repeated transmission procedure and first indication information, the number of PRACH repeated transmissions comprised in the first PRACH repeated transmission procedure, where the first indication information is for indicating a number of PRACH repeated transmissions corresponding to the execution sequential number. For example, the first indication information may be for indicating the number of PRACH repeated transmissions corresponding to each of multiple execution sequential numbers (or multiple PRACH repeated transmission procedures).

It is to be understood that the specific indication manner of the first indication information is not limited in the embodiment of the present disclosure.

For example, the first indication information may indicate multiple numbers of repeated transmissions, and each number of repeated transmissions corresponds to one execution sequential number (or one repeated transmission procedure).

For another example, the first indication information may indicate a reference number of repeated transmissions and multiple number offsets. The reference number of repeated transmissions may be the number of PRACH repeated transmissions included in the first time of PRACH repeated transmission procedure, and each number offset may be a number offset between a subsequent PRACH repeated transmission procedure and the first time of PRACH repeated transmission procedure.

For another example, the first indication information may indicate one number of repeated transmissions and multiple relative offsets. The one number of repeated transmissions may be the number of PRACH repeated transmissions included in the first time of PRACH repeated transmission procedure, and each relative offset may be an offset between the number of PRACH repeated transmissions included in the current PRACH repeated transmission procedure and the number of PRACH repeated transmissions included in a previous PRACH repeated transmission procedure.

In some embodiments, the first indication information indicates the number of PRACH repeated transmissions corresponding to the execution sequential number by means of a pattern.

That is to say, the numbers of PRACH repeated transmissions included in the multiple PRACH repeated transmission procedures may follow a certain pattern distribution.

Optionally, the pattern is predefined, or configured by a network device, or determined by the terminal device according to a preset rule.

Optionally, the pattern may be configured by the network device through any downlink signaling that may include, for example, but is not limited to, a broadcast message.

In some embodiments, the pattern may be represented as multiple numbers of repeated transmissions, and each number of repeated transmissions corresponds to one PRACH repeated transmission procedure, or one execution sequential number.

Optionally, a number of repeated transmissions corresponding to a PRACH repeated transmission procedure performed later is greater than or equal to a number of repeated transmissions corresponding to a PRACH repeated transmission procedure performed earlier.

As an example, the pattern may be represented as a set of numbers of repeated transmissions {N, N, N+2, N+2, N+4, N+4, ...}, or in other words, the numbers of PRACH repeated transmissions included in the PRACH repeated transmission procedure are distributed according to the pattern {N, N, N+2, N+2, N+4, N+4, ...}.

For example, the numbers of PRACH repeated transmissions included in the first time of PRACH repeated transmission procedure and the second time of PRACH repeated transmission procedure are both N; the numbers of PRACH repeated transmissions included in the third PRACH repeated transmission procedure and the fourth time of PRACH repeated transmission procedure are both N+2; and the numbers of PRACH repeated transmissions included in the fifth PRACH repeated transmission procedure and the sixth time of PRACH repeated transmission procedure are both N+4, etc.

Optionally, N may be a predefined value, such as 4, or N may also be configured by the network device.

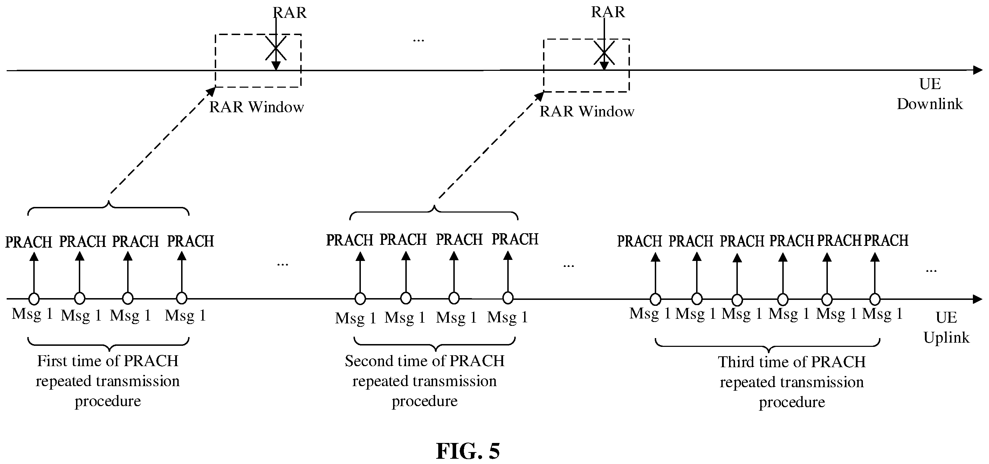

FIG. 5 is a schematic diagram of a pattern distribution of the numbers of PRACH repeated transmissions included in the PRACH repeated transmission procedure taking N=4 as an example. As shown in FIG. 5, the numbers of PRACH repeated transmissions included in the first time of PRACH repeated transmission procedure and the second time of PRACH repeated transmission procedure are both 4, the numbers of PRACH repeated transmissions included in the third PRACH repeated transmission procedure and the fourth time of PRACH repeated transmission procedure are both 6, etc.

In other embodiments of the present disclosure, the terminal device determines, according to the execution sequential number corresponding to the first PRACH repeated transmission procedure and a first number threshold, the number of PRACH repeated transmissions comprised in the first PRACH repeated transmission procedure.

For example, if the execution sequential number corresponding to the first PRACH repeated transmission procedure satisfies the first number threshold, the terminal device determines the number of PRACH repeated transmissions included in the first PRACH repeated transmission procedure as a first value; or if the execution sequential number corresponding to the first PRACH repeated transmission procedure does not satisfy the first number threshold, the terminal device determines the number of PRACH repeated transmissions included in the first PRACH repeated transmission procedure as a second value.

Optionally, the first value is greater than the second value. For example, the first value is 6 and the second value is 4.

Optionally, the first number threshold may be predefined, or configured by the network device.

Optionally, the first number threshold may be configured by the network device through any downlink signaling that may include, for example, but is not limited to, a broadcast message.

Optionally, the first value and the second value may be predefined, or configured by the network device.

Optionally, the first value and the second value may be configured by the network device through any downlink signaling that may include, for example, but are not limited to, broadcast messages.

Optionally, the condition that the execution sequential number corresponding to the first PRACH repeated transmission procedure satisfies the first number threshold may include:

the execution sequential number corresponding to the first PRACH repeated transmission procedure is greater than the first number threshold; or

the execution sequential number corresponding to the first PRACH repeated transmission procedure is greater than or equal to the first number threshold.

Optionally, the condition that execution sequential number corresponding to the first PRACH repeated transmission procedure does not satisfy the first number threshold may include:

the execution sequential number corresponding to the first PRACH repeated transmission procedure is less than the first number threshold; or

the execution sequential number corresponding to the first PRACH repeated transmission procedure is less than or equal to the first number threshold.

In still other embodiments, the numbers of PRACH repeated transmissions included in respective PRACH repeated transmission procedures are the same. Optionally, the numbers of repeated transmissions may be predefined, or may be configured by the network device.

In a second embodiment, the number of PRACH repeated transmissions is determined based on the calculated transmit power for the PRACH.

Since the transmit power for the PRACH may reflect the coverage level of the terminal device, taking into consideration the transmit power for the PRACH when the number of PRACH repeated transmissions is determined is beneficial to both improving the coverage of the PRACH and reducing the interference caused by the PRACH transmission.

It is to be understood that the calculation manner of the transmit power for the PRACH is not limited in the present disclosure. For example, the transmit power for the PRACH may be calculated according to an existing formula, or a newly defined formula.

For example, the calculation may be based only on a target received power of the network device and a pathloss between the network device and the terminal device.

As an example, the calculated transmit power for the PRACH satisfies the following formula:

$$P_{PRACH,b,f,c}(i) = \min\left\{P_{CMAX,f,c}(i), P_{PRACH,t\arg et,f,c} + PL_{b,f,c}\right\}$$

$P_{PRACH,b,f,c}(i)$ represents the calculated transmit power for the PRACH, $P_{CMAX,f,c}(i)$ represents the maximum transmit power for the PRACH, $P_{PRACH,t\arg et,f,c}$ represents the target received power of the network device, and $PL_{b,f,c}$ represents the pathloss.

For another example, the calculation may be based on the target received power of the network device, the pathloss between the network device and the terminal device, the number of times of PRACH power ramps, and the power ramp step length.

It is to be understood that the manner of the ramping of the transmit power for the PRACH is not limited in the present disclosure. For example, the power ramping may be performed in a unit of a PRACH repeated transmission procedure. That is to say, all of the PRACH repeated transmissions in each PRACH repeated transmission procedure use the same transmit power. Alternatively, the power ramping may be performed in the unit of a single PRACH repeated transmission, or the power ramping may be performed in the unit of multiple PRACH repeated transmissions, etc.

In some embodiments, in order to improve the coverage of the PRACH transmission, when the PRACH repeated transmissions are adopted, the number of repeated transmissions may have a correspondence with the calculated power for the PRACH. For example, for PRACH powers within a specific interval, the corresponding number of PRACH repeated transmissions may be set, to satisfy the coverage requirements of the PRACH transmission.

In some embodiments of the present disclosure, the operation S210 may include following operation.

The terminal device may determine the number of PRACH repeated transmissions according to the calculated transmit power for the PRACH and at least one power threshold, where the at least one power threshold has a correspondence with the number of PRACH repeated transmissions.

For example, the terminal device may determine multiple power ranges according to the at least one power threshold, further determine a power range to which the calculated transmit power for the PRACH belongs, and then determine the number of PRACH repeated transmissions.

In some embodiments, the at least one power threshold is predefined, or configured by the network device.

It is to be understood that the at least one power threshold may be configured by the network device through any downlink signaling that includes, for example, but not limited to, a broadcast message.

Optionally, the at least one power threshold may include a first power threshold, and the first power threshold may be a power threshold with regard to whether the PRACH repeated transmissions are performed.

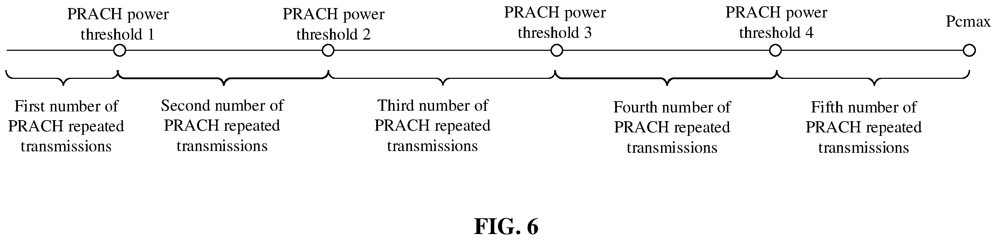

For example, as shown in FIG. 6, the at least one power threshold includes a PRACH power threshold 1 to a PRACH power threshold 4, and the maximum transmit power Pcmax, to form five power ranges. Each power range corresponds to one number of PRACH repeated transmissions. If the calculated transmit power for the PRACH is greater than the PRACH power threshold 3 and less than the PRACH power threshold 4, it is determined that the number of PRACH repeated transmissions is the fourth number of PRACH repeated transmissions.

In a third embodiment, the number of PRACH repeated transmissions is determined according to the measurement result of the downlink signal.

It is to be understood that the specific type of the downlink signal is not limited in the present disclosure. For example, the downlink signal may be an SSB, or a Channel State Information Reference Signal (CSI-RS), etc.

In some embodiments, the measurement result of the downlink signal includes, but is not limited to, at least one of:

a Reference Signal Receiving Power (RSRP), a Reference Signal Receiving Quality (RSRQ), a Signal to Interference plus Noise Ratio (SINR), or a Received Signal Strength Indication (RSSI).

In some embodiments, the measurement result of the downlink signal may reflect the signal quality between the terminal device and the network device, and the signal quality between the terminal device and the network device is considered when the number of PRACH repeated transmissions is determined, which is beneficial to improving the reception performance of the PRACH.

In some embodiments, the operation S210 may include following operation.

The terminal device may determine the number of PRACH repeated transmissions according to the measurement result of the downlink signal and at least one measurement result threshold, where the at least one measurement result threshold has a correspondence with the number of PRACH repeated transmissions.

For example, the terminal device may determine multiple measurement result ranges according to the at least one measurement result threshold, further determine a measurement result range to which the measurement result of the downlink signal belongs, and then determines the number of PRACH repeated transmissions.

In some embodiments, the at least one measurement result threshold is configured by the network device, or may be predefined. For example, the network device may configure the at least one measurement result threshold through a broadcast message, dedicated signaling (e.g., RRC signaling), etc.

In some embodiments, the at least one measurement threshold includes a first measurement result threshold, and a first measurement result range and a second measurement result range may be determined according to the first measurement result threshold. A measurement result in the first measurement result range is smaller than a measurement result in the second measurement result range, the first measurement result range corresponds to a first number of repeated transmissions, and the second measurement result range corresponds to a second number of repeated transmissions. The first number of repeated transmissions is greater than the second number of repeated transmissions.

In the fourth embodiment, the number of PRACH repeated transmissions is determined according to the resource configuration for the PRACH repeated transmissions.

For example, the number of PRACH repeated transmissions is determined according to the number of resources in the resource configuration for the PRACH repeated transmissions.

Optionally, the number of PRACH repeated transmissions is less than or equal to a number of resources in the resource configuration.

In some scenarios, for example, in the non-contention-based random access procedure, the network device indicates, through a PDCCH, resources for the terminal device to perform the PRACH repeated transmissions in the random access procedure. The number of resources available for the PRACH repeated transmissions among the resources for the PRACH repeated transmissions indicated by the PDCCH determines the number of PRACH repeated transmissions.

In some embodiments, the network device may configure a time window within which resources available for the PRACH repeated transmissions are configured. That is, the available PRACH resources within the time window may be used for the PRACH repeated transmissions.

The resources available for the PRACH repeated transmissions may correspond to a same downlink signal, such as an SSB. The terminal device may determine within the time window, according to the association relationship between the selected downlink signal and the PRACH resources, a group of PRACH resources for the PRACH repeated transmissions in the current PRACH repeated transmission procedure. In this case, the number of PRACH repeated transmissions included in the current PRACH repeated transmission procedure may be determined according to the number of PRACH resources in the group of PRACH resources. For example, the number of PRACH repeated transmissions included in the current PRACH repeated transmission procedure does not exceed the number of PRACH resources in the group of PRACH resources.

Optionally, in different time windows, the numbers of resources available for the PRACH repeated transmissions may be the same, or may be different.

In some embodiments of the present disclosure, the method 200 further includes following operation.

Target resources for performing the PRACH repeated transmissions are selected in the resource configuration for the PRACH repeated transmissions according to the number of PRACH repeated transmissions.

For example, when the number of resources included in the resource configuration for the PRACH repeated transmissions is M, and the determined number of PRACH repeated transmissions is K, then the terminal device may select K resources among the M resources as target resources for the PRACH repeated transmissions.

In some embodiments of the present disclosure, the operation S210 may include following operation.

In a case where a downlink signal selected by the terminal device changes, the number of PRACH repeated transmissions is determined according to the first information, where the downlink signal is associated with a beam for transmitting the PRACH.

It is to be understood that the specific type of the downlink signal is not limited in the present disclosure. For example, the downlink signal may be an SSB, a CSI-RS, etc.

For example, when the terminal device initiates the random access procedure, the terminal device may select, according to the measurement result of the SSB, an SSB having a measurement result satisfying the requirement, and further transmit, according to association relationships between SSBs and PRACH resources, the PRACH by using the PRACH resource associated with the SSB. The procedure of selecting the SSB is also a procedure of selecting an appropriate downlink beam. Through the association relationships between the SSBs and the PRACH resources, the terminal device may transmit the PRACH by using the associated uplink beam, so that the network device may receive the PRACH transmitted by the terminal device through the appropriate beam.

Furthermore, in the PRACH repeated transmission procedure, if the terminal device changes the selected SSB, i.e., the terminal device selects a PRACH resource corresponding to a new SSB to transmit the PRACH, in this case, the terminal device needs to re-determine the number of PRACH repeated transmissions. For example, the number of PRACH repeated transmissions is determined according to the manners described in the foregoing first embodiment to fourth embodiment.

In some embodiments of the present disclosure, all of the PRACH repeated transmissions use a same transmit power, or all of the PRACH repeated transmission procedures use a same transmit power.

For example, the terminal device performs a first PRACH repeated transmission procedure and a second PRACH repeated transmission procedure. The transmit power for the PRACH transmission in the first PRACH repeated transmission procedure and the transmit power for the PRACH transmission in the second PRACH repeated transmission procedure.

In some embodiments, the transmit power used in all of the PRACH repeated transmissions does not exceed a maximum transmit power Pcmax for the PRACH.

Therefore, in the embodiment of the present disclosure, the terminal device may ensure the coverage performance of the PRACH only by using an appropriate number of PRACH repeated transmissions in different PRACH repeated transmission procedures without ramping up the transmit power for the PRACH.

In other embodiments of the present disclosure, the transmit power used in the PRACH repeated transmissions is related to at least one of:

an execution sequential number corresponding to the first PRACH repeated transmission procedure; or
the number of PRACH repeated transmissions comprised in the first PRACH repeated transmission procedure.

That is to say, the transmit power used in the PRACH repeated transmissions in one PRACH repeated transmission procedure may be related to the execution sequential number corresponding to the PRACH repeated transmission procedure, and/or related to the number of PRACH repeated transmissions included in the PRACH repeated transmission procedure.

Therefore, in the embodiment of the present disclosure, the coverage performance of the PRACH can be ensured by adjusting the transmit power for the PRACH and using the appropriate numbers of PRACH repeated transmissions in different PRACH repeated transmission procedures.

In some embodiments, the transmit power used in the PRACH repeated transmissions in the first PRACH repeated transmission procedure is related to the execution sequential number corresponding to the first PRACH repeated transmission procedure and/or the number of PRACH repeated transmissions included in the first PRACH repeated transmission procedure.

For example, the transmit power used in the PRACH repeated transmissions is determined according to a first transmit power and a target power offset, where the first transmit power is the calculated transmit power for the PRACH, and the target power offset includes a first power offset and/or a second power offset, the first power offset being related to the number of PRACH repeated transmissions comprised in the first PRACH repeated transmission procedure, and the second power offset being related to a sequential number corresponding to the first PRACH repeated transmission procedure.

As a specific example, the transmit power used in the PRACH repeated transmissions is determined according to a first transmit power and a first power offset. The first transmit power is the calculated transmit power for the PRACH, and the first power offset is related to the number of PRACH repeated transmissions included in the first PRACH repeated transmission procedure.

For example, the transmit power for at least one PRACH in the PRACH repeated transmission procedure is related to the number of PRACH repeated transmissions. For example, a power offset, i.e. a first power offset, related to the number of repeated transmissions, may be added to the calculated transmit power for the PRACH. By setting the first power offset, the total transmit power for the PRACH repeated transmission procedure may be reasonably increased compared with the transmit power for the PRACH repeated transmission procedure performed previously, so as to gradually improve the coverage of the PRACH. It is thus beneficial to better control the increase of the total transmit power for the PRACH compared with only increasing the number of PRACH repeated transmissions.

As another specific example, the transmit power used in the PRACH repeated transmissions is determined according to the first transmit power and a second power offset. The first transmit power is the calculated transmit power for the PRACH, and the second power offset is related to the execution sequential number of the first PRACH repeated transmission procedure among the PRACH repeated transmission procedures.

For example, the power for at least one PRACH in the PRACH repeated transmissions is related to the execution sequential number corresponding to the PRACH repeated transmission procedure. As shown in FIG. 5, the transmit power for the PRACH in the third time of PRACH repeated transmission procedure has a certain power offset compared with the transmit power for the PRACH in the second time of PRACH repeated transmission procedure. By setting the second power offset, the transmit power for the PRACH repeated transmission procedure may be reasonably increased compared with the transmit power for the PRACH repeated transmission procedure performed previously, so as to gradually improve the coverage of the PRACH. It is thus beneficial to better control the increase of the transmit power for the PRACH repeated transmission procedure compared with only increasing the number of PRACH repeated transmissions.

In some embodiments, the first power offset is predefined, or configured by the network device. It is to be understood that the first power offset may be configured by the network device through any downlink signaling that includes, for example, but not limited to, a broadcast message.

In some embodiments, the second power offset is predefined, or configured by the network device. It is to be understood that this second power offset may be configured by the network device through any downlink signaling that includes, for example, but not limited to, a broadcast message.

It is to be understood that the calculation manner of the first transmit power is not limited in the present disclosure. For example, the transmit power for the PRACH may be calculated according to an existing formula or a newly defined formula.

For example, the first transmit power may be calculated according to only the target received power of the network device and the pathloss between the network device and the terminal device.

As an example, the first transmit power satisfies the following formula:

$$P_{PRACH,b,f,c}(i) = \min\left\{P_{CMAX,f,c}(i), P_{PRACH,\text{target},f,c} + PL_{b,f,c}\right\}$$

$P_{PRACH,b,f,c}(i)$ represents the first transmit power, $P_{CMAX,f,c}(i)$ represents the maximum transmit power for the PRACH, $P_{PRACH,\text{target},f,c}$ represents the target received power of the network device, and $PL_{b,f,c}$ represents the pathloss.

For another example, the first transmit power may be calculated according to the target received power of the network device, the pathloss between the network device and the terminal device, the number of times of PRACH power ramps, and the power ramp step length.

It is to be understood that the manner of the ramping of the transmit power for the PRACH is not limited in the present disclosure. For example, the power ramping may be performed in a unit of a PRACH repeated transmission procedure. That is to say, all of the PRACH repeated transmissions in each PRACH repeated transmission procedure use the same transmit power, or the power ramping may be performed in the unit of a single PRACH repeated transmission, or the power ramping may be performed in the unit of multiple PRACH repeated transmissions, etc.

Optionally, in some embodiments, the transmit power used in the PRACH repeated transmissions may also be related to the execution sequential number of the PRACH repeated transmission in one PRACH repeated transmission procedure. For example, in one PRACH repeated transmission procedure, the transmit power used in the PRACH repeated transmission is ramped up successively, or the transmit power is ramped up every two PRACH transmissions, etc.

Optionally, the transmit power used in one PRACH repeated transmission procedure may be related to the transmit power used in a previous PRACH repeated transmission procedure. For example, the transmit power used in one PRACH repeated transmission procedure has a certain power ramp compared with the transmit power used in the previous PRACH repeated transmission procedure. Alternatively, the transmit power used in one PRACH repeated transmission procedure may be related to the transmit power used in the first time of PRACH repeated transmission procedure. For example, the transmit power used in each PRACH transmission procedure has a certain power ramp compared with the transmit power used in the first time of PRACH repeated transmission procedure, and the specific amount of the power ramping may be related to the execution sequential number corresponding to the PRACH repeated transmission procedure.

For example, in the above-described embodiment, the first transmit power may be the transmit power used in a previous PRACH transmission procedure, or may be the transmit power used in the first time of PRACH repeated transmission procedure.

In some embodiments of the present disclosure, the method 200 further includes following operation.

In a case where a total number of times of execution of the PRACH repeated transmission procedures satisfies a first threshold value, the PRACH repeated transmissions are stopped.

In some embodiments, the first threshold is predefined, or configured by the network device.

It is to be understood that the first threshold may be configured by the network device through any downlink signaling that may include, for example, but is not limited to, a system message.

Optionally, when the PRACH repeated transmission procedure is performed for one time, a count value of the number of times of execution of the PRACH repeated transmission procedures is incremented by 1, and when the count value of number of times of execution of the PRACH repeated transmission procedures reaches the first threshold value, the PRACH repeated transmissions are stopped, and it is confirmed whether the RAR sent by the network device is received.

In some embodiments of the present disclosure, the method 200 further includes following operation.

In a case where a total number of PRACH repeated transmissions comprised in performed PRACH repeated transmission procedures satisfies a second threshold, the PRACH repeated transmissions are stopped.

In some embodiments, the second threshold is predefined, or configured by the network device.

It is to be understood that the second threshold may be configured by the network device through any downlink signaling that may include, for example, but is not limited to, a system message.

Optionally, the second threshold may be configured by an information element 'preamble maximum transmission number' (preambleTransMax), and for example, the value of the preambleTransMax may include but is not limited to 3, 4, 5, 6, 7, 8, 10, 20, 50, 100 and 200. When PRACH repeated transmission is performed for one time, the count value of the number of PRACH transmissions is incremented by 1. When the count value of the number of PRACH transmissions reaches the value configured by preambleTransMax, the PRACH repeated transmissions are stopped, and it is confirmed whether the RAR transmitted by the network device is received.

In summary, the terminal device may determine the number of PRACH repeated transmissions according to at least one of: the PRACH repeated transmission procedure corresponding to the PRACH repeated transmissions, the calculated transmit power for the PRACH, the resource configuration for the PRACH transmission, and the measurement result of the downlink signal. It is thus beneficial to both improving the coverage performance of the PRACH and reducing the interference caused by the PRACH transmission.

Furthermore, the terminal device may perform all of the PRACH repeated transmissions by using the same transmit power, or may perform the PRACH repeated transmissions by using a transmit power related to the PRACH repeated transmission procedure and/or the number of repeated transmissions included in the PRACH repeated transmission procedure.

Furthermore, the terminal device may stop the PRACH repeated transmissions according to the number of times of execution of the PRACH repeated transmission procedures or the total number of times of execution of the PRACH repeated transmissions.

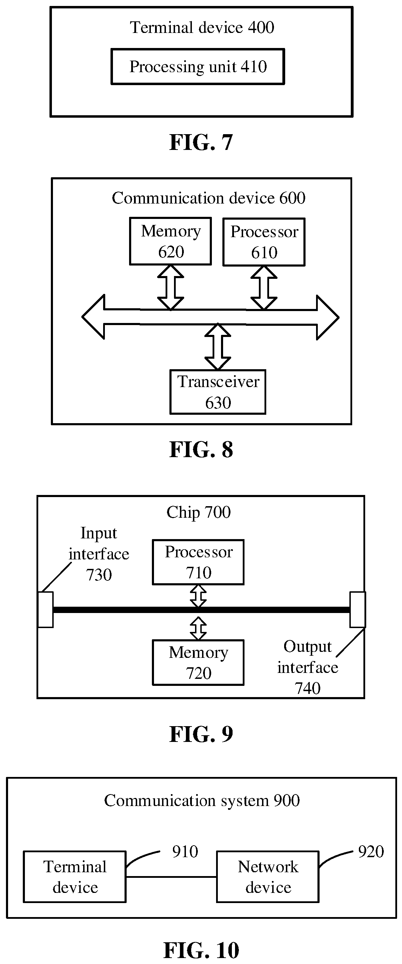

The method embodiments of the present disclosure have been described in detail above with reference to FIG. 4 to FIG. 6, and the apparatus embodiments of the present disclosure are described in detail below with reference to FIG. 7 to FIG. 10. It is to be understood that the apparatus embodiments correspond to the method embodiments, and similar descriptions of the apparatus embodiments may refer to the method embodiments

FIG. 7 shows a schematic block diagram of a terminal device 400 according to an embodiment of the present disclosure. As shown in FIG. 7, the terminal device 400 includes a processing unit 410.

The processing unit 410 is configured to determine a number of PRACH repeated transmissions according to first information, where the first information includes at least one of:

a PRACH repeated transmission procedure corresponding to the PRACH repeated transmissions, where one PRACH repeated transmission procedure corresponds to one Random Access Response (RAR);
a calculated transmit power for a PRACH;
a resource configuration for the PRACH repeated transmissions;
a measurement result of a downlink signal.

In some embodiments, the PRACH repeated transmissions correspond to a first PRACH repeated transmission procedure, and the number of PRACH repeated transmissions is a number of PRACH repeated transmissions comprised in the first PRACH repeated transmission procedure.

In some embodiments, the processing unit 410 is further configured to:
determine, according to an execution sequential number corresponding to the first PRACH repeated transmission procedure, the number of PRACH repeated transmissions comprised in the first PRACH repeated transmission procedure.

In some embodiments, the processing unit 410 is further configured to:
determine, according to the execution sequential number corresponding to the first PRACH repeated transmission procedure and first indication information, the number of PRACH repeated transmissions comprised in the first PRACH repeated transmission procedure, where the first indication information is for indicating a number of PRACH repeated transmissions corresponding to the execution sequential number.

In some embodiments, the first indication information indicates the number of PRACH repeated transmissions corresponding to the execution sequential number by means of a pattern.

In some embodiments, the pattern is predefined, or configured by a network device, or determined by the terminal device according to a preset rule.

In some embodiments, the first indication information is for indicating multiple numbers of repeated transmissions, where each number of repeated transmissions corresponds to one PRACH repeated transmission procedure, and a number of repeated transmissions corresponding to a PRACH repeated transmission procedure performed later is greater than or equal to a number of repeated transmissions corresponding to a PRACH repeated transmission procedure performed earlier.

In some embodiments, the processing unit 410 is further configured to:
determine the number of PRACH repeated transmissions according to the calculated transmit power for the PRACH and at least one power threshold, where the at least one power threshold has a correspondence with the number of PRACH repeated transmissions.

In some embodiments, the at least one power threshold is predefined, or configured by a network device.

In some embodiments, the processing unit 410 is further configured to:
determine the number of PRACH repeated transmissions according to the measurement result of the downlink signal and at least one measurement result threshold, where the at least one measurement result threshold has a correspondence with the number of PRACH repeated transmissions.

In some embodiments, the at least one measurement result threshold is predefined, or configured by a network device.

In some embodiments, the processing unit 410 is further configured to:
determine the number of PRACH repeated transmissions according to a number of resources in the resource configuration for the PRACH repeated transmissions.

In some embodiments, the processing unit 410 is further configured to:
select, according to the number of PRACH repeated transmissions, target resources for performing the PRACH repeated transmissions in the resource configuration for the PRACH repeated transmissions.

In some embodiments, the processing unit 410 is further configured to:
in a case where a downlink signal selected by the terminal device changes, determine the number of PRACH repeated transmissions according to the first information, where the downlink signal is associated with a resource for transmitting the PRACH.

In some embodiments, the transmit power used in the PRACH repeated transmissions is related to at least one of:

an execution sequential number corresponding to the first PRACH repeated transmission procedure; or
the number of PRACH repeated transmissions comprised in the first PRACH repeated transmission procedure.

In some embodiments, the transmit power used in the PRACH repeated transmissions is determined according to a first transmit power and a target power offset, where the first transmit power is the calculated transmit power for the PRACH, and the target power offset includes a first power offset and/or a second power offset, the first power offset being related to the number of PRACH repeated transmissions comprised in the first PRACH repeated transmission procedure, and the second power offset being related to a sequential number corresponding to the first PRACH repeated transmission procedure.

In some embodiments, the first power offset is predefined, or configured by a network device.

In some embodiments, the second power offset is predefined, or configured by a network device.

In some embodiments, the calculated transmit power for the PRACH is determined according to a target received power of a network device and a pathloss between the terminal device and the network device.

In some embodiments, all of the PRACH repeated transmissions use a same transmit power.

In some embodiments, the terminal device 400 further includes a communicating unit.

The communicating unit is configured to stop the PRACH repeated transmissions in a case where a total number of times of execution of the PRACH repeated transmission procedures satisfies a first threshold value.

In some embodiments, the first threshold is predefined, or configured by a network device.

In some embodiments, the terminal device 400 further includes a communicating unit.

The communicating unit is configured to stop the PRACH repeated transmissions in a case where a total number of PRACH repeated transmissions comprised in performed PRACH repeated transmission procedures satisfies a second threshold.

In some embodiments, the second threshold is predefined, or configured by a network device.

Optionally, in some embodiments, the above-described communication unit may be a communication interface or transceiver or an input-output interface of a communication chip or of a system-on-chip. The processing unit may be one or more processors.

It is to be understood that the terminal device 400 in the embodiment of the present disclosure may correspond to the terminal device in the method embodiments in the present disclosure, and that the above operations and other operations and/or functions of the various units in the terminal device 400 are respectively used for implementing the respective flows implemented by the terminal device in the method 200 shown in FIG. 4 to FIG. 6.

FIG. 8 is a schematic structural diagram of a communication device 600 according to an embodiment of the present disclosure. The communication device 600 shown in FIG. 8 includes a processor 610 that can invoke and execute a computer program from a memory to implement the method in the embodiment of the present disclosure.

Optionally, as shown in FIG. 6, the communication device 600 may further include a memory 620. The processor 610 may invoke and execute a computer program from the memory 620 to implement the method in the embodiment of the present disclosure.

The memory 620 may be a separate device independent of the processor 610, or the memory 620 may be integrated into the processor 610.

Optionally, as shown in FIG. 8, the communication device 600 may also include a transceiver 630. The processor 610 may control the transceiver 630 to communicate with other devices, and in particular to transmit information or data to other devices, or receive information or data sent by other devices.

The transceiver 630 may include a transmitter and a receiver. The transceiver 630 may further include an antenna(s), the number of which may be one or more.

Optionally, the communication device 600 may be specifically the network device in the embodiments of the present disclosure, and the communication device 600 may implement the corresponding flows implemented by the network device in each method of the embodiments of the present disclosure, which will not be repeated herein for the sake of brevity.

Optionally, the communication device 600 may be a mobile terminal/terminal device in the embodiments of the present disclosure, and the communication device 600 may implement the corresponding flows implemented by the mobile terminal/terminal device in each method of the embodiments of the present disclosure, which will not be repeated herein for the sake of brevity

FIG. 9 is a schematic structural diagram of a chip according to an embodiment of the present disclosure. The chip 700 shown in FIG. 9 includes a processor 710 that may invoke and execute a computer program from a memory to implement the method in the embodiment of the present disclosure.

Optionally, as shown in FIG. 9, the chip 700 may further include a memory 720. The processor 710 may invoke and execute a computer program from the memory 720 to implement the method in the embodiment of the present disclosure.

The memory 720 may be a separate device independent of the processor 710, or the memory 720 may be integrated into the processor 710.

Optionally, the chip 700 may further include an input interface 730. The processor 710 may control the input interface 730 to communicate with other devices or chips, and in particular may obtain information or data sent by other devices or chips.

Optionally, the chip 700 may also include an output interface 740. The processor 710 may control the output interface 740 to communicate with other devices or chips, and in particular may output information or data to other devices or chips.

Optionally, the chip may be applied to the network device in the embodiments of the present disclosure, and the chip may implement the corresponding flows implemented by the network device in each method of the embodiments of the disclosure, which will not be repeated herein for the sake of brevity.

Optionally, the chip may be applied to the mobile terminal/terminal device in the embodiments of the present disclosure, and the chip may implement the corresponding flows implemented by the mobile terminal/terminal device in each method of the embodiment of the disclosure, which will not be repeated herein for the sake of brevity.

It is to be understood that the chip mentioned in the embodiments of the present disclosure may also be referred to as a system level chip, a system chip, a chip system or an on-chip system chip, etc.

FIG. 10 is a schematic block diagram of a communication system 900 according to an embodiment of the present disclosure. As shown in FIG. 10, the communication system 900 includes a terminal device 910 and a network device 920.

Herein, the terminal device 910 may be used for implementing the corresponding functions implemented by the terminal device in the above-mentioned methods, and the network device 920 may be used for implementing the corresponding functions implemented by the network device in the above-mentioned methods, which will not be repeated herein for the sake of brevity.

It is to be understood that the processor of the embodiments of the disclosure may be an integrated circuit chip with signal processing capacity. In an implementation process, various steps of the above method embodiments may be completed by integrated logic circuits of hardware in the processor or instructions in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software modules may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It may be understood that the memory in the embodiments of the disclosure may be a volatile memory or a non-volatile memory, or may include a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external high-speed cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It is to be noted that the memory of the systems and methods described in this specification includes but is not limited to these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the disclosure are intended to include, but not limited to, these and any other suitable types of memories.

The embodiments of the disclosure further provide a computer-readable storage medium, which is configured to store a computer program.

Optionally, the computer-readable storage medium may be applied to the network device in the embodiments of the disclosure. The computer program enables a computer to execute corresponding flows implemented by the network device in each method of the embodiments of the disclosure, which will not be elaborated here for simplicity.

Optionally, the computer-readable storage medium may be applied to the mobile terminal/terminal device in the embodiments of the disclosure. The computer program enables a computer to execute corresponding flows implemented by the mobile terminal/terminal device in each method of the embodiments of the disclosure, which will not be elaborated here for simplicity.

The embodiments of the disclosure further provide a computer program product, which includes a computer program instruction.

Optionally, the computer program product may be applied to the network device in the embodiments of the disclosure. The computer program instruction enables a computer to execute corresponding flows implemented by the network device in each method of the embodiments of the disclosure, which will not be elaborated here for simplicity.

Optionally, the computer program product may be applied to the mobile terminal/terminal device in the embodiments of the disclosure. The computer program instruction enables a computer to execute corresponding flows implemented by the mobile terminal/terminal device in each method of the embodiments of the disclosure, which will not be elaborated herein for simplicity.

The embodiment of the application also provides a computer program.

Optionally, the computer program may be applied to a network device in the embodiments of the disclosure. The computer program, when running on a computer, enables the computer to execute corresponding flows implemented by the network device in each method of the embodiments of the disclosure, which will not be elaborated here for simplicity.

Optionally, the computer program may be applied to the mobile terminal/terminal device in the embodiments of the disclosure. When running on a computer, the computer program enables the computer to execute corresponding flows implemented by the mobile terminal/terminal device in each method of the embodiments of the disclosure, which will not be elaborated here for simplicity.

Those of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may implement the described functions for each particular disclosure by different methods, but the implementation shall not be considered beyond the scope of the disclosure.

It may be clearly understood by a person skilled in the art that, for the purpose of convenient and brief description, for a detailed working process of the foregoing system, apparatus, and units, reference may be made to a corresponding process in the foregoing method embodiments, and details are not described again herein.

In the several embodiments provided in the disclosure, it is to be understood that the disclosed system, apparatus, and methods may be implemented in other modes. For example, the apparatus embodiments described above are only schematic, and for example, division of the units is only logic function division, and other division manners may be adopted during practical implementation. For example, multiple units or components may be combined or integrated into another system, or some characteristics may be neglected or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments.

In addition, functional units in various embodiments of the disclosure may be integrated into one processing unit, or each of the units may be physically separated, or two or more units may be integrated into one unit.

When the functions are realized in a form of software functional units and sold or used as an independent product, they may be stored in a computer-readable storage medium. With respective to this understanding, the technical solutions of the embodiments of the disclosure essentially or the parts that contribute to the prior art, or part of the technical solutions can be embodied in the form of a software product. The computer software product is stored in a storage medium, including multiple instructions for causing a computer device (which may be a personal computer, a server, or a network device, and the like) to execute all or part of the steps of the method described in the embodiments of the disclosure. The foregoing storage medium includes a USB flash disk, a mobile hard disk drive, an ROM, an RAM, and various media that can store program codes, such as a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

**Claims**

1. A method for wireless communication, applied to a terminal device, the method comprising:
   determining a number of Physical Random Access Channel, PRACH, repeated transmissions according to first information, wherein the first information comprises at least one of:

> a PRACH repeated transmission procedure corresponding to the PRACH repeated transmissions, wherein one PRACH repeated transmission procedure corresponds to one Random Access Response, RAR;
> a calculated transmit power for a PRACH;
> a resource configuration for the PRACH repeated transmissions; or
> a measurement result of a downlink signal.

2. The method of claim 1, wherein the PRACH repeated transmissions correspond to a first PRACH repeated transmission procedure, and the number of PRACH repeated transmissions is a number of PRACH repeated transmissions comprised in the first PRACH repeated transmission procedure.

3. The method of claim 2, wherein determining the number of PRACH repeated transmissions according to the first information comprises:
determining, according to an execution sequential number corresponding to the first PRACH repeated transmission procedure, the number of PRACH repeated transmissions comprised in the first PRACH repeated transmission procedure.

4. The method of claim 3, wherein determining, according to the execution sequential number corresponding to the first PRACH repeated transmission procedure, the number of PRACH repeated transmissions comprised in the first PRACH repeated transmission procedure comprises:
determining, according to the execution sequential number corresponding to the first PRACH repeated transmission procedure and first indication information, the number of PRACH repeated transmissions comprised in the first PRACH repeated transmission procedure, wherein the first indication information is for indicating a number of PRACH repeated transmissions corresponding to the execution sequential number.

5. The method of claim 4, wherein the first indication information indicates the number of PRACH repeated transmissions corresponding to the execution sequential number by means of a pattern.

6. The method of claim 5, wherein the pattern is predefined, or configured by a network device, or determined by the terminal device according to a preset rule.

7. The method of any one of claims 4 to 6, wherein the first indication information is for indicating a plurality of numbers of repeated transmissions, wherein each number of repeated transmissions corresponds to one PRACH repeated transmission procedure, and a number of repeated transmissions corresponding to a PRACH repeated transmission procedure performed later is greater than or equal to a number of repeated transmissions corresponding to a PRACH repeated transmission procedure performed earlier.

8. The method of claim 1 or 2, wherein determining the number of PRACH repeated transmissions according to the first information comprises:
determining the number of PRACH repeated transmissions according to the calculated transmit power for the PRACH and at least one power threshold, wherein the at least one power threshold has a correspondence with the number of PRACH repeated transmissions.

9. The method of claim 8, wherein the at least one power threshold is predefined, or configured by a network device.

10. The method of claim 1 or 2, wherein determining the number of PRACH repeated transmissions according to the first information comprises:
determining the number of PRACH repeated transmissions according to the measurement result of the downlink signal and at least one measurement result threshold, wherein the at least one measurement result threshold has a correspondence with the number of PRACH repeated transmissions.

11. The method of claim 10, wherein the at least one measurement result threshold is predefined, or configured by a network device.

12. The method of claim 1 or 2, wherein determining the number of PRACH repeated transmissions according to the first information comprises:
determining the number of PRACH repeated transmissions according to a number of resources in the resource configuration for the PRACH repeated transmissions.

13. The method of any one of claims 2 to 11, further comprising:
selecting, according to the number of PRACH repeated transmissions, target resources for performing the PRACH repeated transmissions in the resource configuration for the PRACH repeated transmissions.

14. The method of any one of claims 2 to 13, wherein determining the number of PRACH repeated transmissions according to the first information comprises:
in a case where a downlink signal selected by the terminal device changes, determining the number of PRACH repeated transmissions according to the first information, wherein the downlink signal is associated with a resource for transmitting the PRACH.

15. The method of any one of claims 2 to 14, wherein the transmit power used in the PRACH repeated transmissions is related to at least one of:

an execution sequential number corresponding to the first PRACH repeated transmission procedure; or
the number of PRACH repeated transmissions comprised in the first PRACH repeated transmission procedure.

16. The method of claim 15, wherein the transmit power used in the PRACH repeated transmissions is determined according to a first transmit power and a target power offset, wherein the first transmit power is the calculated transmit power for the PRACH, and the target power offset comprises a first power offset and/or a second power offset, the first power offset being related to the number of PRACH repeated transmissions comprised in the first PRACH repeated transmission procedure, and the second power offset being related to a sequential number corresponding to the first PRACH repeated transmission procedure.

17. The method of claim 16, wherein the first power offset is predefined, or configured by a network device.

18. The method of claim 16, wherein the second power offset is predefined, or configured by a network device.

19. The method of claim 8 or 16, wherein the calculated transmit power for the PRACH is determined according to a target received power of a network device and a pathloss between the terminal device and the network device.

20. The method of any one of claims 1 to 14, wherein all of the PRACH repeated transmissions use a same transmit power.

21. The method of any one of claims 1 to 20, further comprising:
in a case where a total number of times of execution of the PRACH repeated transmission procedures satisfies a first threshold value, stopping the PRACH repeated transmissions.

22. The method of claim 21, wherein the first threshold is predefined, or configured by a network device.

23. The method of any one of claims 1 to 20, further comprising:
in a case where a total number of PRACH repeated transmissions comprised in performed PRACH repeated transmission procedures satisfies a second threshold, stopping the PRACH repeated transmissions.

24. The method of claim 23, wherein the second threshold is predefined, or configured by a network device.

25. A terminal device, comprising:
a processing unit, configured to determine a number of Physical Random Access Channel, PRACH, repeated transmissions according to first information, wherein the first information comprises at least one of:

a PRACH repeated transmission procedure corresponding to the PRACH repeated transmissions, wherein one PRACH repeated transmission procedure corresponds to one Random Access Response, RAR;
a calculated transmit power for a PRACH;
a resource configuration for the PRACH repeated transmissions; or
a measurement result of a downlink signal.

26. The terminal device of claim 25, wherein the PRACH repeated transmissions correspond to a first PRACH repeated transmission procedure, and the number of PRACH repeated transmissions is a number of PRACH repeated transmissions comprised in the first PRACH repeated transmission procedure.

27. The terminal device of claim 26, wherein the processing unit is further configured to:
determine, according to an execution sequential number corresponding to the first PRACH repeated transmission procedure, the number of PRACH repeated transmissions comprised in the first PRACH repeated transmission procedure.

28. The terminal device of claim 27, wherein the processing unit is further configured to:
determine, according to the execution sequential number corresponding to the first PRACH repeated transmission procedure and first indication information, the number of PRACH repeated transmissions comprised in the first PRACH repeated transmission procedure, wherein the first indication information is for indicating a number of PRACH repeated transmissions corresponding to the execution sequential number.

29. The terminal device of claim 28, wherein the first indication information indicates the number of PRACH repeated transmissions corresponding to the execution sequential number by means of a pattern.

30. The terminal device of claim 29, wherein the pattern is predefined, or configured by a network device, or determined by the terminal device according to a preset rule.

31. The terminal device of any one of claims 28 to 30, wherein the first indication information is for indicating a plurality of numbers of repeated transmissions, wherein each number of repeated transmissions corresponds to one PRACH repeated transmission procedure, and a number of repeated transmissions corresponding to a PRACH repeated transmission procedure performed later is greater than or equal to a number of repeated transmissions corresponding to a PRACH repeated transmission procedure performed earlier.

32. The terminal device of claim 25 or 26, wherein the processing unit is further configured to:
determine the number of PRACH repeated transmissions according to the calculated transmit power for the PRACH and at least one power threshold, wherein the at least one power threshold has a correspondence with the number of PRACH repeated transmissions.

33. The terminal device of claim 32, wherein the at least one power threshold is predefined, or configured by a network device.

34. The terminal device of claim 25 or 26, wherein the processing unit is further configured to:
determine the number of PRACH repeated transmissions according to the measurement result of the downlink signal and at least one measurement result threshold, wherein the at least one measurement result threshold has a correspondence with the number of PRACH repeated transmissions.

35. The terminal device of claim 34, wherein the at least one measurement result threshold is predefined, or configured by a network device.

36. The terminal device of claim 25 or 26, wherein the processing unit is further configured to:
determine the number of PRACH repeated transmissions according to a number of resources in the resource configuration for the PRACH repeated transmissions.

37. The terminal device of any one of claims 26 to 35, wherein the processing unit is further configured to:
select, according to the number of PRACH repeated transmissions, target resources for performing the PRACH repeated transmissions in the resource configuration for the PRACH repeated transmissions.

38. The terminal device of any one of claims 26 to 37, wherein the processing unit is further configured to:
in a case where a downlink signal selected by the terminal device changes, determine the number of PRACH repeated transmissions according to the first information, wherein the downlink signal is associated with a resource for transmitting the PRACH.

39. The terminal device of any one of claims 26 to 38, wherein the transmit power used in the PRACH repeated transmissions is related to at least one of:

an execution sequential number corresponding to the first PRACH repeated transmission procedure; or

the number of PRACH repeated transmissions comprised in the first PRACH repeated transmission procedure.

40. The terminal device of claim 39, wherein the transmit power used in the PRACH repeated transmissions is determined according to a first transmit power and a target power offset, wherein the first transmit power is the calculated transmit power for the PRACH, and the target power offset comprises a first power offset and/or a second power offset, the first power offset being related to the number of PRACH repeated transmissions comprised in the first PRACH repeated transmission procedure, and the second power offset being related to a sequential number corresponding to the first PRACH repeated transmission procedure.

41. The terminal device of claim 40, wherein the first power offset is predefined, or configured by a network device.

42. The terminal device of claim 40, wherein the second power offset is predefined, or configured by a network device.

43. The terminal device of claim 32 or 40, wherein the calculated transmit power for the PRACH is determined according to a target received power of a network device and a pathloss between the terminal device and the network device.

44. The terminal device of any one of claims 25 to 38, wherein all of the PRACH repeated transmissions use a same transmit power.

45. The terminal device of any one of claims 25 to 44, further comprising:
a communicating unit, configured to stop the PRACH repeated transmissions in a case where a total number of times of execution of the PRACH repeated transmission procedures satisfies a first threshold value.

46. The terminal device of claim 45, wherein the first threshold is predefined, or configured by a network device.

47. The terminal device of any one of claims 25 to 44, further comprising:
a communicating unit, configured to stop the PRACH repeated transmissions in a case where a total number of PRACH repeated transmissions comprised in performed PRACH repeated transmission procedures satisfies a second threshold.

48. The terminal device of claim 47, wherein the second threshold is predefined, or configured by a network device.

49. A terminal device comprising: a processor and a memory, wherein the memory is configured to store a computer program and the processor is configured to invoke and execute the computer program stored in the memory to perform the method of any one of claims 1 to 24.

50. A chip comprising a processor configured to invoke and execute a computer program from a memory, to enable a device on which the chip is mounted to perform the method of any one of claims 1 to 24.

51. A computer-readable storage medium configured to store a computer program that causes a computer to perform the method of any one of claims 1 to 24.

52. A computer program product comprising computer program instructions that cause a computer to perform the method of any one of claims 1 to 24.

53. A computer program causing a computer to perform the method of any one of claims 1 to 24.

**100**

110

120          120

**FIG. 1**

| Terminal device | | Network device |
|---|---|---|

Step 1: Msg1

Step 2: Msg2

Step 3: Msg3

Step 4: Msg4

**FIG. 2**

RAR

Msg 2 RAR Window

UE
Downlink

PRACH  PRACH  PRACH  PRACH

Msg 1    Msg 1    Msg 1    Msg 1

UE Uplink

PRACH repeated
transmissions

**FIG. 3**

200

| Terminal device | Network device |

S210, a number of PRACH
repeated transmissions is
determined according to
first information

S220, the PRACH repeated
transmissions are performed
according to the number of PRACH
repeated transmissions

**FIG. 4**

**FIG. 5**

EP 4 580 278 A1

PRACH power
threshold 1

PRACH power
threshold 2

PRACH power
threshold 3

PRACH power
threshold 4

Pcmax

First number of
PRACH repeated
transmissions

Second number of
PRACH repeated
transmissions

Third number of
PRACH repeated
transmissions

Fourth number of
PRACH repeated
transmissions

Fifth number of
PRACH repeated
transmissions

**FIG. 6**

EP 4 580 278 A1

Terminal device 400

Processing unit 410

**FIG. 7**

Communication device 600

Memory 620

Processor 610

Transceiver 630

**FIG. 8**

Chip 700

Input interface 730

Processor 710

Memory 720

Output interface 740

**FIG. 9**

Communication system 900

Terminal device

910

Network device

920

**FIG. 10**

## INTERNATIONAL SEARCH REPORT

| International application No. |
| --- |
| **PCT/CN2022/115247** |

| A. | CLASSIFICATION OF SUBJECT MATTER |
| --- | --- |

H04W72/04(2023.01)i

According to International Patent Classification (IPC) or to both national classification and IPC

| B. | FIELDS SEARCHED |
| --- | --- |

Minimum documentation searched (classification system followed by classification symbols)

H04L,H04W,H04Q

Documentation searched other than minimum documentation to the extent that such documents are included in the fields searched

Electronic data base consulted during the international search (name of data base and, where practicable, search terms used)

CNTXT, ENTXTC: 随机接入, 重传, 重复传输, 功率, 配置, 响应, 测量, PRACH, Random Access, Retransmission, Repeated Transmission, Power, Configuration, Response, Measurement

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2022022140 A1 (HUAWEI TECHNOLOGIES CO., LTD.) 20 January 2022 (2022-01-20) claims 1-20, and description, pp. 4-7, and figures 3-6 | 1-53 |
| X | WO 2013022774 A2 (APPLE INC.) 14 February 2013 (2013-02-14) description, paragraphs 0024-0044 | 1-53 |
| A | CN 113973271 A (VIVO COMMUNICATION TECHNOLOGY CO., LTD.) 25 January 2022 (2022-01-25) entire document | 1-53 |
| A | WO 2022006851 A1 (OPPO GUANGDONG MOBILE TELECOMMUNICATIONS CORP., LTD.) 13 January 2022 (2022-01-13) entire document | 1-53 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 April 2023** | **19 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/115247**

| Patent document cited in search report | | | Publication date (day/month/year) | Patent family member(s) | | | Publication date (day/month/year) |
|---|---|---|---|---|---|---|---|
| US | 2022022140 | A1 | 20 January 2022 | EP | 3944541 | A1 | 26 January 2022 |
| | | | | WO | 2020200273 | A1 | 08 October 2020 |
| | | | | CN | 111786756 | A | 16 October 2020 |
| | | | | CN | 114499803 | A | 13 May 2022 |
| WO | 2013022774 | A2 | 14 February 2013 | KR | 20140043498 | A | 09 April 2014 |
| | | | | JP | 2014524690 | A | 22 September 2014 |
| | | | | TW | 201320803 | A | 16 May 2013 |
| | | | | WO | 2013022774 | A3 | 18 April 2013 |
| | | | | EP | 2740314 | A2 | 11 June 2014 |
| | | | | US | 2013035084 | A1 | 07 February 2013 |
| | | | | IN | 201400216 | P2 | 28 March 2013 |
| | | | | CN | 103782647 | A | 07 May 2014 |
| CN | 113973271 | A | 25 January 2022 | WO | 2022017526 | A1 | 27 January 2022 |
| WO | 2022006851 | A1 | 13 January 2022 | CN | 115486194 | A | 16 December 2022 |

Form PCT/ISA/210 (patent family annex) (July 2022)